# EUROPEAN PATENT APPLICATION

(11) **EP 4 742 371 A1**
(43) Date of publication of application: **13.05.2026**
(21) Application number: 25207878.7
(22) Date of filing: 10.10.2025
(51) Int. Cl.: H01M 10/613, H01M 10/647, H01M 50/209, H01M 50/289, H01M 50/507

(54) **POWER STORAGE DEVICE AND VEHICLE**

(30) Priority: 07.11.2024 JP 2024195241
(71) Applicant: TOYOTA JIDOSHA KABUSHIKI KAISHA, Toyota-shi, Aichi-ken 471-8571 (JP)
(72) Inventor: TSUNEKAWA, Kunihiro, Toyota-shi, Aichi-ken, 471-8571 (JP); NAKADA, Koki, Toyota-shi, Aichi-ken, 471-8571 (JP); TAKESHITA, Shinya, Toyota-shi, Aichi-ken, 471-8571 (JP); TAKAHASHI, Naoyuki, Toyota-shi, Aichi-ken, 471-8571 (JP); KIMURA, Ryo, Toyota-shi, Aichi-ken, 471-8571 (JP); KATO, Kazuhito, Toyota-shi, Aichi-ken, 471-8571 (JP); SHIMONAKA, Toshihiro, Toyota-shi, Aichi-ken, 471-8571 (JP); ICHISAWA, Kota, Toyota-shi, Aichi-ken, 471-8571 (JP); MIYAHARA, Kenta, Toyota-shi, Aichi-ken, 471-8571 (JP)
(74) Representative: Winter, Brandl - Partnerschaft mbB

(57) **Abstract**

A power storage device includes: a power storage module (11) including a plurality of power storage cells (30); an accommodation case that accommodates the power storage module (11); a bus bar module (29) provided in the accommodation case and electrically connecting the plurality of power storage cells (30); and a biasing member (14) that improves close contact between the plurality of power storage cells (30) and the bus bar module (29). Since the biasing member (14) improves close contact between the plurality of power storage cells and the bus bar module, the state of contact between the power storage cells and bus bars can be improved.

## Description

### CROSS REFERENCE TO RELATED APPLICATIONS

This nonprovisional application is based on Japanese Patent Application No. 2024-195241 filed on November 7, 2024 with the Japan Patent Office, the entire contents of which are hereby incorporated by reference.

### BACKGROUND

### Field

The present disclosure relates to a power storage device and a vehicle.

### Description of the Background Art

Conventionally, various power storage devices have been proposed. For example, a power storage device described in Chinese Patent Application Publication No. 116686151 includes an accommodation case, and a plurality of power storage cells accommodated in the accommodation case. Each power storage cell includes a cell case, and a positive electrode external terminal and a negative electrode external terminal provided on a lower surface of the cell case.

### SUMMARY

In the power storage device described above, bus bars for electrically connecting the power storage cells are disposed on lower surfaces of the power storage cells.

Here, when the state of contact between the power storage cells and the bus bars is deteriorated, electrical connection of the power storage cells is broken.

The present disclosure has been made in light of the aforementioned problem, and an object thereof is to provide a power storage device and a vehicle capable of improving the state of contact between power storage cells and bus bars.

A power storage device includes: a power storage module including a plurality of power storage cells; an accommodation case that accommodates the power storage module; a bus bar module provided in the accommodation case and electrically connecting the plurality of power storage cells; and a biasing member that improves close contact between the plurality of power storage cells and the bus bar module.

In the power storage device, the biasing member is disposed adjacent to the power storage module, the bus bar module is disposed on a side opposite to the biasing member with respect to the power storage module, and the biasing member biases the power storage module toward the bus bar module.

The biasing member includes a first plate portion disposed adjacent to the power storage module, a second plate portion disposed to be spaced apart from the first plate portion, and an intermediate member disposed between the first plate portion and the second plate portion and elastically deformed, and a coolant passage through which a coolant can flow is formed between the first plate portion and the second plate portion by the intermediate member.

The power storage device further includes an elastic member disposed between the power storage module and the biasing member.

The bus bar module is disposed below the power storage module, and the biasing member is disposed on an upper surface of the power storage module.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a side view schematically showing a vehicle 2 having a power storage device 1 mounted thereon.
Fig. 2 is an exploded perspective view showing power storage device 1.
Fig. 3 is a perspective view showing a power storage cell 30.
Fig. 4 is a plan view showing a cooling device 12 and the like.
Fig. 5 is a perspective view showing cooling device 12.
Fig. 6 is a perspective view showing an insulating plate 24, a bus bar module 29, and one power storage cell 30.
Fig. 7 is a cross sectional view taken along a line VII-VII shown in Fig. 4.
Fig. 8 is a cross sectional view showing a power storage device 1A.
Fig. 9 is an exploded perspective view showing a biasing member 14A.
Fig. 10 is a cross sectional view showing a power storage device 1B according to a second modification.
Fig. 11 is a cross sectional view showing a power storage device 1C.
Fig. 12 is a perspective view showing a power storage cell 30C.

### DESCRIPTION OF THE PREFERRED EMBODIMENTS

An embodiment of the present disclosure will be described with reference to the drawings. It should be noted that, in the drawings referred to below, the same or corresponding members will be designated by the same reference numerals.

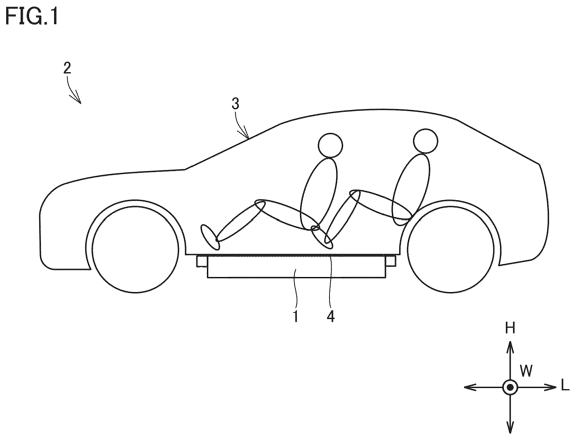

Fig. 1 is a side view schematically showing a vehicle 2 having a power storage device 1 mounted thereon. Vehicle 2 includes a vehicle main body 3. Vehicle main body 3 includes a floor panel 4, and floor panel 4 is provided at a bottom portion of vehicle main body 3. Floor panel 4 divides an external space of the vehicle and an internal space of the vehicle. In addition, power storage device 1 is disposed on a lower surface of floor panel 4. It should be noted that vehicle main body 3 includes a pair of side members (not shown), the side members are disposed to be spaced apart from each other in a vehicle width direction, and the side members are formed to extend in a front-rear direction of the vehicle. In addition, power storage device 1 is fixed to the side members.

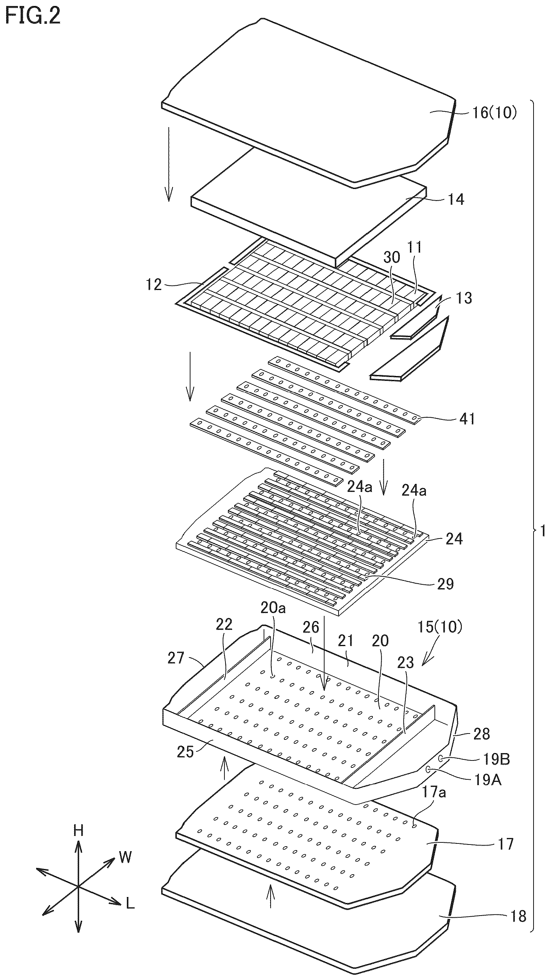

Fig. 2 is an exploded perspective view showing power storage device 1. It should be noted that, in Fig. 2 and the like, a width direction W is a width direction of power storage device 1, and is also the vehicle width direction of vehicle 2. A front-rear direction L is a front-rear direction of power storage device 1, and is also the front-rear direction of vehicle 2. An up-down direction H is an up-down direction in a vertical direction.

Power storage device 1 includes an accommodation case 10, a power storage module 11, a cooling device 12, an electrical device 13, a biasing member 14, and a bus bar module 29.

Accommodation case 10 includes a lower case 15, an upper case 16, an insulating plate 17, and a shear panel 18.

Lower case 15 is formed to open upward. Upper case 16 is fixed to lower case 15 to close an opening of lower case 15. Lower case 15 includes a bottom plate 20, a peripheral wall 21, partition walls 22 and 23, and an insulating plate 24.

Bottom plate 20 is formed in a plate shape. Peripheral wall 21 is formed along an outer peripheral edge portion of bottom plate 20, and is formed to extend upward from the outer peripheral edge portion of bottom plate 20. Peripheral wall 21 is formed in an annular shape.

Peripheral wall 21 includes a side wall 25, a side wall 26, an end plate 27, and an end plate 28.

Side wall 25 and side wall 26 are disposed to be arranged in width direction W, and side wall 25 and side wall 26 are formed to extend in front-rear direction L.

End plate 27 and end plate 28 are provided to be spaced apart from each other in front-rear direction L, and end plate 27 and end plate 28 are formed to extend in width direction W. End plate 27 connects one end of side wall 25 and one end of side wall 26, and end plate 28 connects one end of side wall 25 and one end of side wall 26.

It should be noted that each of side wall 25, side wall 26, end plate 27, and end plate 28 is provided with a fixed member described later, and each fixed member is fixed to vehicle main body 3.

Partition wall 22 and partition wall 23 are disposed in a region surrounded by bottom plate 20 and peripheral wall 21. Partition wall 22 is disposed adjacent to end plate 27, and partition wall 22 is formed to extend in width direction W.

Partition wall 23 is disposed to be spaced apart from end plate 28 in front-rear direction L. Partition wall 23 is also formed to extend in width direction W.

End plate 28 is provided with breathable membranes 19A and 19B. Breathable membranes 19A and 19B are waterproof air-permeable membranes, and for example, breathable membranes 19A and 19B are made of Gore-Tex (registered trademark) or the like.

Insulating plate 17 is fixed to a lower surface of bottom plate 20, and a plurality of openings 17a are formed in insulating plate 17.

A plurality of openings 20a are also formed in bottom plate 20. In addition, openings 20a and openings 17a are mutually arranged in the up-down direction.

Shear panel 18 is disposed below insulating plate 17, and an outer peripheral edge portion of shear panel 18 is fixed to the lower surface of bottom plate 20. In addition, shear panel 18 is formed to cover insulating plate 17 and the lower surface of bottom plate 20.

Power storage module 11 is disposed on an upper surface of insulating plate 24. Electrical device 13 is disposed between partition wall 23 and end plate 28.

Power storage module 11 includes a plurality of power storage cells 30. The plurality of power storage cells 30 are arranged in front-rear direction L, and are also arranged in width direction W.

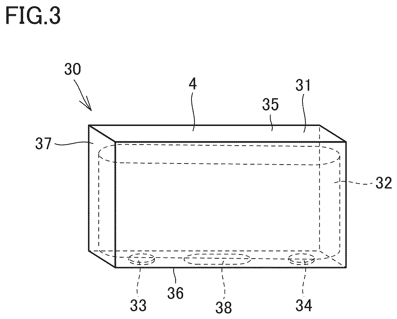

Fig. 3 is a perspective view showing power storage cell 30. Power storage cell 30 includes a cell case 31, an electrode body 32, a first external terminal 33, and a second external terminal 34. Cell case 31 includes a top plate 35, a bottom plate 36, and a peripheral wall 37. Peripheral wall 37 is formed to connect top plate 35 and bottom plate 36.

Electrode body 32 is disposed in cell case 31. First external terminal 33 and second external terminal 34 are provided on bottom plate 36, and are disposed to be spaced apart from each other.

In addition, a smoke discharge valve 38 is formed on bottom plate 36, and smoke discharge valve 38 is disposed between first external terminal 33 and second external terminal 34.

First external terminal 33 also enters cell case 31, and first external terminal 33 is connected to a first electrode of electrode body 32. Second external terminal 34 enters cell case 31, and second external terminal 34 is connected to a second electrode of electrode body 32.

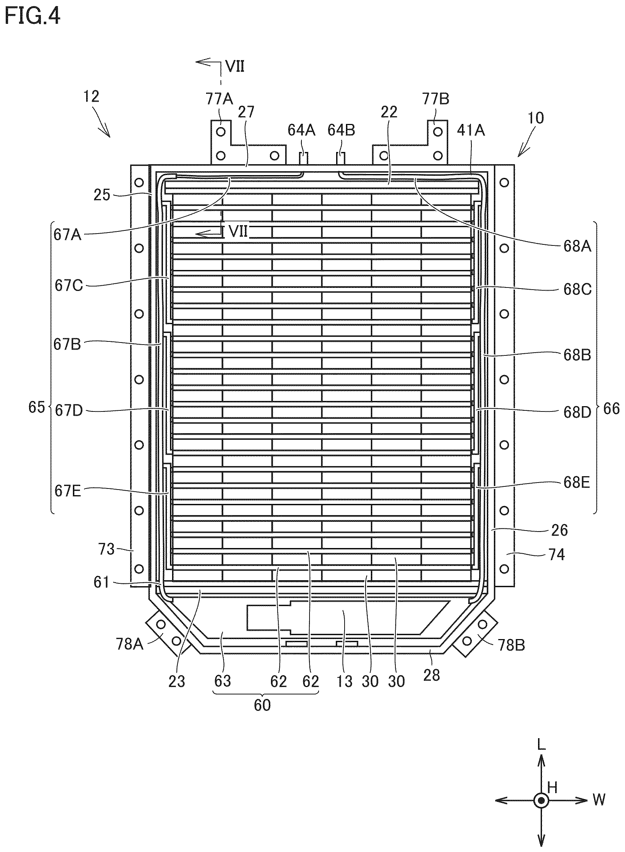

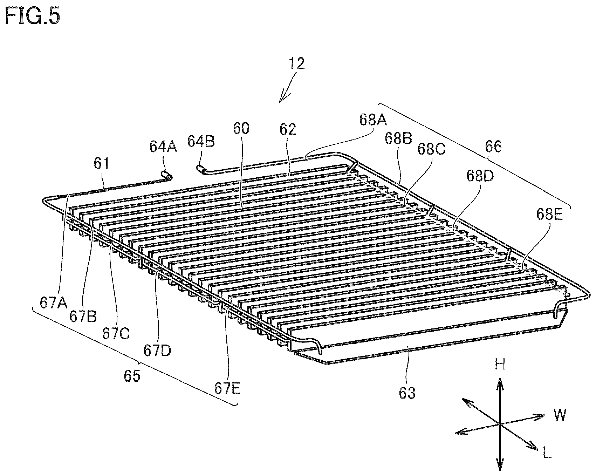

Fig. 4 is a plan view showing cooling device 12 and the like, and Fig. 5 is a perspective view showing cooling device 12.

Referring to Figs. 4 and 5, cooling device 12 includes a heat exchanger 60 and a coolant pipe 61. Heat exchanger 60 includes a plurality of heat exchange plates 62 and a heat exchange plate 63.

The plurality of heat exchange plates 62 are disposed to be spaced apart from each other in front-rear direction L. Each heat exchange plate 62 is disposed to extend in width direction W.

A plurality of power storage cells 30 arranged in width direction W are disposed between heat exchange plates 62 adjacent to each other in front-rear direction L. In heat exchange plate 62, a plurality of coolant passages are formed to be spaced apart from each other in up-down direction H.

Coolant pipe 61 is disposed in accommodation case 10, and coolant pipe 61 includes a supply pipe 65 and a discharge pipe 66.

Supply pipe 65 is connected to a supply portion 64A, and supply portion 64A is inserted into an insertion hole formed in end plate 27 and is fixed to end plate 27. Supply pipe 65 includes a main supply pipe 67A, a main supply pipe 67B, and branch pipes 67C, 67D, and 67E.

Main supply pipe 67A is disposed between partition wall 22 and end plate 27, and is disposed to extend in width direction W. Main supply pipe 67A is formed to extend toward side wall 25.

Main supply pipe 67B is connected to an end portion of main supply pipe 67A, and is formed to extend in front-rear direction L along side wall 25.

A plurality of heat exchange plates 62 disposed to be spaced apart from each other in front-rear direction L are connected to branch pipe 67C. Similarly, a plurality of heat exchange plates 62 disposed to be spaced apart from each other in front-rear direction L are also connected to each of branch pipes 67D and 67E.

Heat exchange plate 63 is connected to an end portion of main supply pipe 67B on an end plate 28 side. Heat exchange plate 63 is disposed on a portion of an upper surface of bottom plate 20 located between partition wall 23 and end plate 28. It should be noted that an insulating plate is disposed between heat exchange plate 63 and bottom plate 20. Electrical device 13 is disposed on an upper surface of heat exchange plate 63. Electrical device 13 includes, for example, a battery ECU, a junction box, and the like.

Discharge pipe 66 includes a main discharge pipe 68A, a main discharge pipe 68B, and branch pipes 68C, 68D, and 68E.

Discharge pipe 66 is connected to a discharge portion 64B, and discharge portion 64B is inserted into an insertion hole formed in end plate 27 and is fixed to end plate 27. Insertion holes are formed to be spaced apart from each other in width direction W.

Main discharge pipe 68A is disposed between partition wall 22 and end plate 27, and is disposed to extend in width direction W. Main discharge pipe 68A is formed to extend toward side wall 26.

Main discharge pipe 68B is connected to an end portion of main discharge pipe 68A, and is formed to extend along side wall 26.

Branch pipes 68C, 68D, and 68E are disposed below main discharge pipe 68B, and are connected to main supply pipe 67B. Branch pipes 68C, 68D, and 68E are disposed to be spaced apart from each other in front-rear direction L.

The plurality of heat exchange plates 62 disposed to be spaced apart from each other in front-rear direction L are connected to branch pipe 68C. Similarly, the plurality of heat exchange plates 62 disposed to be spaced apart from each other in front-rear direction L are also connected to each of branch pipes 68D and 68E. Heat exchange plate 63 is connected to an end portion of main discharge pipe 68B on the end plate 28 side.

It should be noted that, as shown in Fig. 4, fixed members 77A and 77B protruding in front-rear direction L are provided on an outer side surface of end plate 27. Fixed members 78A and 78B are also provided on an outer side surface of end plate 28. Similarly, a fixed member 73 is provided on an outer side surface of side wall 25, and a fixed member 74 is provided on an outer side surface of side wall 26. In addition, each fixed member is fixed to vehicle main body 3 by a fastening member (not shown).

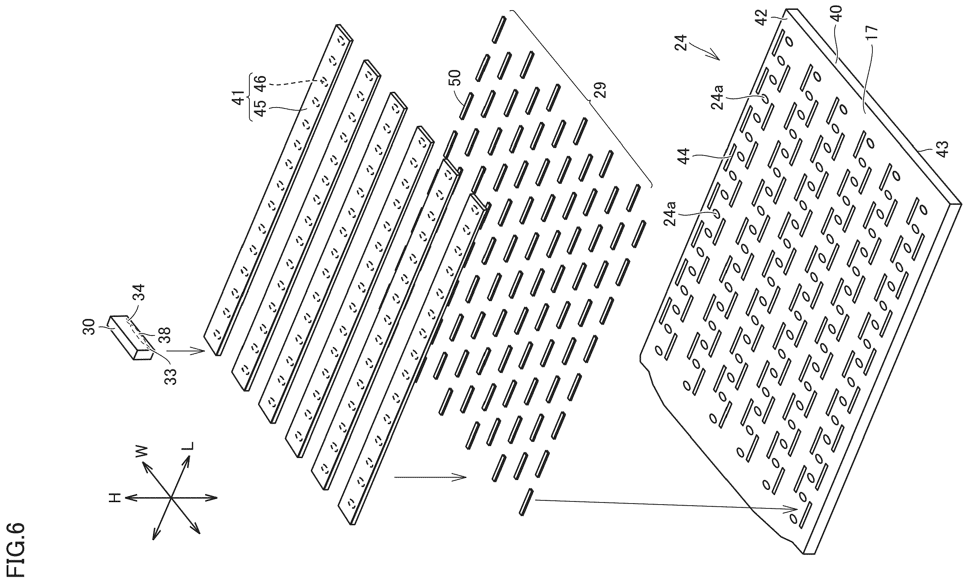

Fig. 6 is a perspective view showing insulating plate 24, bus bar module 29, and one power storage cell 30.

Insulating plate 24 includes a plate main body 40 and a plurality of closing bands 41. Plate main body 40 is formed in a plate shape. Plate main body 40 includes an upper surface 42 and a lower surface 43, and a plurality of openings 24a are formed in plate main body 40. It should be noted that opening 24a penetrates plate main body 40 to reach upper surface 42 and lower surface 43. The plurality of openings 24a are formed to be spaced apart from each other in front-rear direction L and width direction W.

A plurality of grooves 44 are formed in upper surface 42 of plate main body 40. The plurality of grooves 44 are formed to be spaced apart from each other in front-rear direction L, and are formed to be spaced apart from each other in width direction W. It should be noted that, in width direction W, each groove 44 is formed to pass between other two grooves 44.

Closing band 41 includes a band portion 45 extending in front-rear direction L, and a plurality of closing portions 46 formed on a lower surface of band portion 45. Closing band 41 is provided on upper surface 42 of plate main body 40, and is provided to close a plurality of openings 24a arranged in front-rear direction L. In addition, each closing portion 46 is disposed in opening 24a.

Bus bar module 29 includes a plurality of bus bars 50. Each bus bar 50 is disposed in each groove 44, and each bus bar 50 is fixed to plate main body 40. It should be noted that each bus bar 50 is made of a conductive material such as a metal material.

Power storage cell 30 is disposed on an upper surface of bus bar module 29. First external terminal 33 of power storage cell 30 is disposed on an upper surface of bus bar 50, and second external terminal 34 thereof is disposed on an upper surface of another bus bar 50. In addition, by disposing the plurality of power storage cells 30 on the upper surface of bus bar module 29, power storage cells 30 adjacent to each other in front-rear direction L are electrically connected in series.

Here, smoke discharge valve 38 in power storage cell 30, opening 24a in plate main body 40, opening 20a in lower case 15, and opening 17a in insulating plate 17 are disposed to be arranged in up-down direction H. Accordingly, a high-temperature gas discharged from smoke discharge valve 38 passes through the openings, and is exhausted to the outside of accommodation case 10.

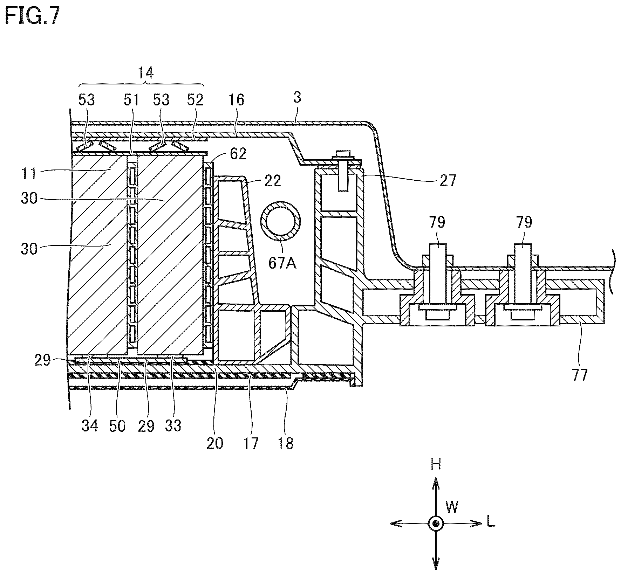

Fig. 7 is a cross sectional view taken along a line VII-VII shown in Fig. 4. Referring to Figs. 7 and 6, a fixed member 77 is formed at end plate 27. In addition, fixed member 77 is fixed to vehicle main body 3 by a plurality of fastening members 79. It should be noted that fixed member 77, end plate 27, and partition wall 22 include hollow portions formed therein.

Biasing member 14 is disposed on a side opposite to bus bar module 29 with respect to power storage module 11. In addition, biasing member 14 is disposed between power storage module 11 and upper case 16.

Biasing member 14 includes a plate portion 51, a plate portion 52, and a plurality of intermediate members 53. Plate portion 51 is disposed on an upper surface of power storage module 11. Plate portion 52 is disposed to be spaced upward from plate portion 51. The plurality of intermediate members 53 are provided to be spaced apart from each other between plate portion 51 and plate portion 52.

The plurality of intermediate members 53 are disposed in an array to be spaced apart from each other in front-rear direction L and width direction W. It should be noted that each intermediate member 53 is welded to plate portion 52, for example. It should be noted that each intermediate member 53 is a disc spring, for example. Accordingly, intermediate member 53 is formed to be elastically deformable in the up-down direction.

According to power storage device 1 configured as described above, a biasing force of the plurality of intermediate members 53 is applied to power storage module 11 through plate portion 51.

As the biasing force is applied to power storage module 11, power storage cells 30 are pressed against bus bar module 29. Thereby, it is possible to improve close contact between power storage cells 30 and bus bar module 29, and it is possible to improve electrical connection between power storage cells 30 and bus bar module 29.

It should be noted that, when power storage device 1 described above is assembled, insulating plate 24 is disposed on the upper surface of bottom plate 20 in Fig. 2. Thereby, bus bar module 29 is disposed in lower case 15. Thereafter, power storage module 11 is disposed on the upper surface of bus bar module 29. Thereby, power storage cells 30 are electrically connected to each other. Thereafter, biasing member 14 is disposed on the upper surface of power storage module 11, and upper case 16 is fixed to lower case 15. Thereby, biasing member 14 can bring power storage module 11 into close contact with bus bar module 29.

As another assembling method, for example, bus bar module 29 is attached to power storage module 11. For example, first external terminal 33 and second external terminal 34 of each power storage cell 30 and bus bars 50 may be welded, or may be fastened by fastening members such as bolts and nuts.

Thereafter, bus bar module 29 having power storage module 11 fastened thereto is disposed on insulating plate 17. On this occasion, each bus bar 50 is disposed in groove 44 of insulating plate 17.

Thereafter, biasing member 14 is disposed on the upper surface of power storage module 11. Then, upper case 16 is fixed to lower case 15. Thereby, it is possible to improve close contact between bus bar module 29 and power storage module 11.

### (First Modification)

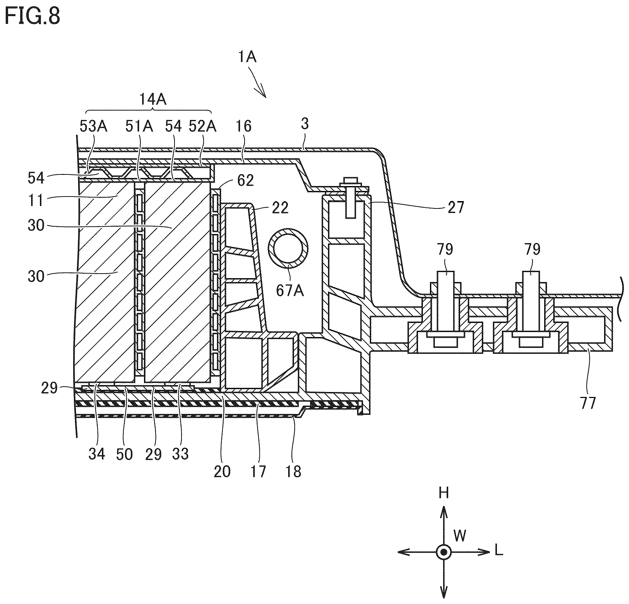

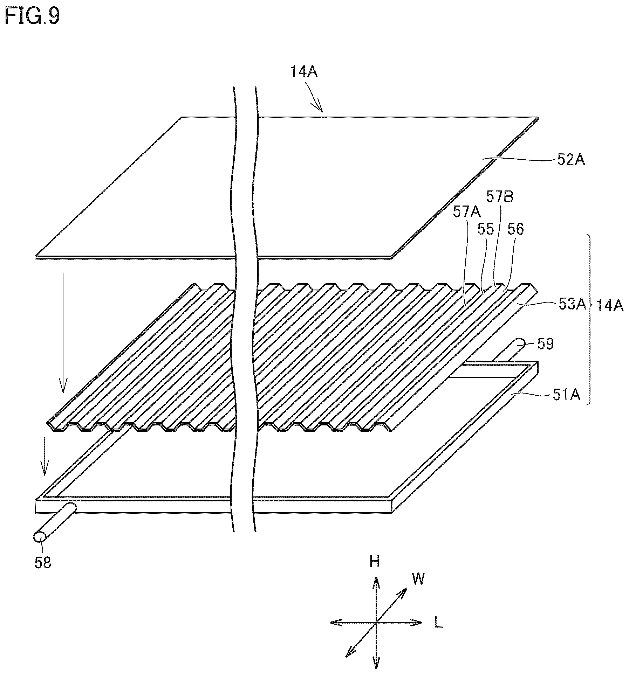

A power storage device 1A according to a first modification will be described using Figs. 8 and 9. Power storage device 1A is configured as described above. The configuration of power storage device 1A is the same as that of power storage device 1, except for the configuration of the biasing member.

Fig. 8 is a cross sectional view showing power storage device 1A. Power storage device 1A includes a biasing member 14A. Biasing member 14A includes a plate portion 51A, a plate portion 52A, and an intermediate member 53A.

Fig. 9 is an exploded perspective view showing biasing member 14A. In intermediate member 53A, a plurality of recesses and projections extending in width direction W are formed. It should be noted that each of the recesses and the projections is formed by an inclined portion 55, an inclined portion 56, and a base portion 57A or 57B. An air supply pipe 58 and an air exhaust pipe 59 are connected to biasing member 14A. It should be noted that a fan or the like is connected to air supply pipe 58, and a coolant such as air, for example, is supplied from air supply pipe 58 into biasing member 14A. Then, the coolant flowing through biasing member 14A is discharged from air exhaust pipe 59 to the outside of power storage device 1.

As shown in Fig. 8, a plurality of coolant passages 54 are formed by sandwiching intermediate member 53A between plate portion 51A and plate portion 52A. The coolant supplied from air supply pipe 58 flows through coolant passages 54.

Also in power storage device 1A configured as described above, biasing member 14A is formed to be elastically deformable in up-down direction H. Accordingly, also in power storage device 1A, biasing member 14A can bring power storage module 11 into close contact with bus bar module 29. Furthermore, power storage module 11 can be cooled by the coolant flowing through coolant passages 54.

It should be noted that a liquid coolant may be employed as the coolant flowing through biasing member 14A. In this case, plate portion 51A includes a bottom plate and an annular side wall in an annular shape formed to rise upward from an outer peripheral edge portion of the bottom plate, and plate portion 52A is welded to the annular side wall. Also in such a case, the bottom plate of plate portion 51A and plate portion 52A are deformed to warp, and intermediate member 53A is also elastically deformed, and thereby a biasing force can be applied to power storage module 11.

In addition, cooling performance of power storage module 11 can be improved by cooling the upper surface of power storage module 11 and cooling side surfaces of power storage cells 30.

It should be noted that intermediate member 53A may be disposed such that coolant passages 54 extend in front-rear direction L. In this case, the direction in which a coolant flows through heat exchange plates 62 of cooling device 12 intersects with the direction in which the coolant flows through coolant passages 54, and power storage module 11 can be cooled uniformly.

### (Second Modification)

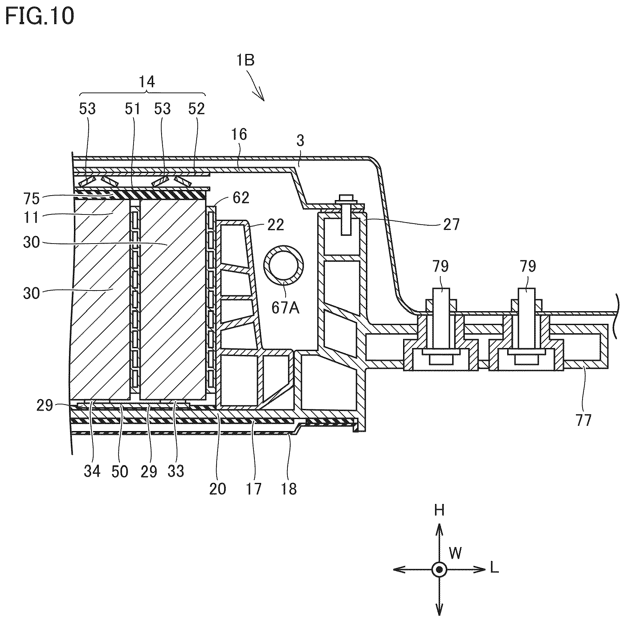

Fig. 10 is a cross sectional view showing a power storage device 1B according to a second modification. In power storage device 1B, components other than an elastic member 75 are the same as those in power storage device 1.

In power storage device 1B, elastic member 75 is provided between biasing member 14 and power storage module 11. It should be noted that elastic member 75 is an elastic rubber or the like, for example.

Since elastic member 75 is provided between power storage module 11 and biasing member 14, a biasing force from biasing member 14 is easily distributed uniformly to power storage module 11. Thereby, it is possible to suppress a case where there is power storage cell 30 to which the biasing force is not applied from biasing member 14.

### (Third Modification)

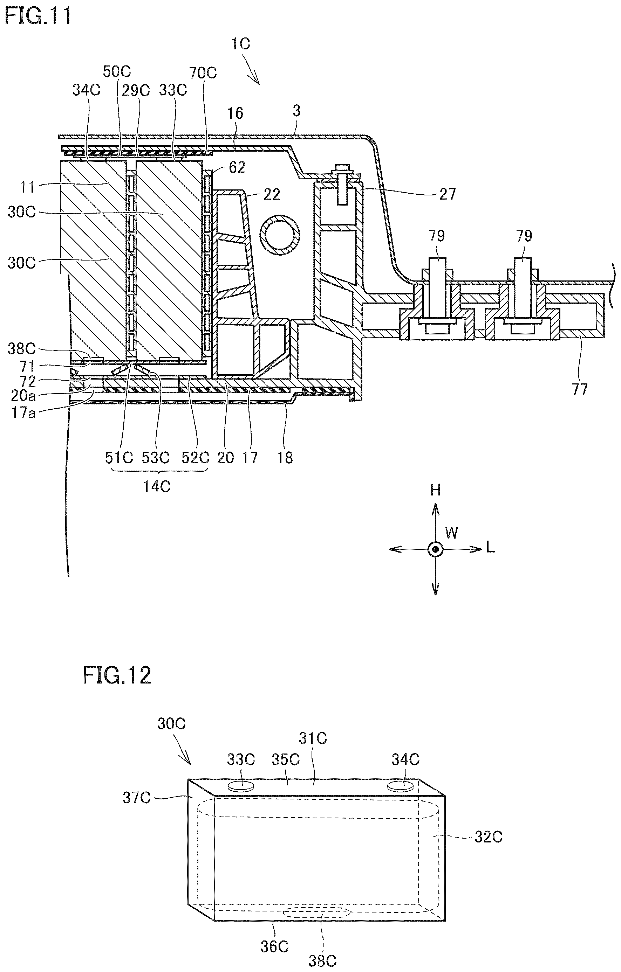

Fig. 11 is a cross sectional view showing a power storage device 1C. Power storage device 1C includes power storage module 11, a biasing member 14C, and a bus bar module 29C. Power storage module 11 includes a plurality of power storage cells 30C.

Fig. 12 is a perspective view showing power storage cell 30C. Power storage cell 30C includes a cell case 31C, an electrode body 32C, a first external terminal 33C, and a second external terminal 34C.

A smoke discharge valve 38C is formed on a bottom plate 36C of cell case 31C, and first external terminal 33C and second external terminal 34C are provided on a top plate 35C.

In Fig. 11, bus bar module 29C includes a plurality of bus bars 50C provided on an insulating plate 70C. In addition, biasing member 14C is disposed between power storage module 11 and insulating plate 24.

Biasing member 14C includes a plate portion 51C, a plate portion 52C, and an intermediate member 53C. In addition, an opening 71 is formed in plate portion 51C of biasing member 14C, and an opening 72 is formed in plate portion 52C thereof. In addition, smoke discharge valve 38C is disposed above opening 71C. Further, opening 20a is disposed below opening 72.

Also in power storage device 1C described above, biasing member 14C presses power storage module 11 against bus bar module 29C, and can improve close contact between power storage module 11 and bus bar module 29C.

Further, a high-temperature gas discharged from smoke discharge valve 38C in power storage cell 30C passes through opening 71, opening 72, and opening 20a, and is discharged to a space between shear panel 18 and insulating plate 17. It should be noted that, in the space between shear panel 18 and insulating plate 17, a portion communicating with the outside of power storage device 1C is formed, and the high-temperature gas is exhausted from the portion to the outside of power storage device 1C.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

## Claims

1. A power storage device (1, 1A, 1B, 1C) comprising:
a power storage module (11) including a plurality of power storage cells (30, 30C);
an accommodation case (10) that accommodates the power storage module (11);
a bus bar module (29, 29C) provided in the accommodation case (10) and electrically connecting the plurality of power storage cells (30, 30C); and
a biasing member (14, 14A, 14C) that improves close contact between the plurality of power storage cells (30, 30C) and the bus bar module (29).

2. A power storage device (1, 1A, 1B, 1C) comprising:
a power storage module (11) including a plurality of power storage cells (30, 30C);
an accommodation case (10) that accommodates the power storage module (11);
a bus bar module (29) provided in the accommodation case (10) and electrically connecting the plurality of power storage cells (30, 30C); and
a biasing member (14, 14A, 14C) disposed on a side opposite to the bus bar module (29, 29C) with respect to the power storage module (11), wherein
the biasing member (14, 14A, 14C) biases the power storage module (11) toward the bus bar module (29, 29C).

3. The power storage device (1, 1A, 1B, 1C) according to claim 1 or 2, wherein
the biasing member (14, 14A, 14C) is disposed adjacent to the power storage module (11),
the bus bar module (29, 29C) is disposed on a side opposite to the biasing member (14, 14A, 14C) with respect to the power storage module (11), and
the biasing member (14, 14A, 14C) biases the power storage module (11) toward the bus bar module (29, 29C).

4. The power storage device (1A) according to claim 1 or 2, wherein
the biasing member (14A) includes
a first plate portion (51A) disposed adjacent to the power storage module (11),
a second plate portion (52A) disposed to be spaced apart from the first plate portion (51A), and
an intermediate member (53A) disposed between the first plate portion (51A) and the second plate portion (52A) and elastically deformed, and
a coolant passage (54) through which a coolant can flow is formed between the first plate portion (51A) and the second plate portion (52A) by the intermediate member (53A).

5. The power storage device (1B) according to claim 1 or 2, further comprising an elastic member (75) disposed between the power storage module (11) and the biasing member (14).

6. The power storage device (1, 1A) according to claim 1 or 2, wherein
the bus bar module (29) is disposed below the power storage module (11), and
the biasing member (14, 14A) is disposed on an upper surface of the power storage module (11).

7. A vehicle (2) comprising the power storage device (1, 1A, 1B, 1C) according to any one of claims 1 to 6, wherein
the vehicle (2) comprises a vehicle main body (3) including a floor panel (4), and
the power storage device (1, 1A, 1B, 1C) is disposed on a lower surface of the floor panel (4).
